# EUROPÄISCHE PATENTSCHRIFT

(11) **EP 0 922 870 B1**
(45) Veröffentlichungstag und Bekanntmachung des Hinweises auf die Patenterteilung: **07.07.2004**
(21) Anmeldenummer: 98120824.2
(22) Anmeldetag: 03.11.1998
(51) Int. Cl.: F16C 19/52

(54) **Verschleissmessvorrichtung für Grosswälzlager**
Wear measuring device for large rolling bearings
Dispositif de mesure d' usure pour paliers de grandes dimensions

(30) Priorität: 11.12.1997 DE 19755000
(43) Veröffentlichungstag der Anmeldung: 16.06.1999
(73) Patentinhaber: Rothe Erde GmbH, 44137 Dortmund (DE)
(72) Erfinder: Claus, Wolfgang Dipl.-Ing., 59510 Lippetal (DE)
(74) Vertreter: John, Ernst, Dipl.-Ing.

(56) Entgegenhaltungen:
- EP-A- 0 856 733
- CA-A- 2 232 756
- US-A- 4 092 053

## Beschreibung

Die Erfindung betrifft eine Verschleißmessvorrichtung in einem Großwälzlager nach dem Anspruch 1, wie sie aus der EP-A-856 733 bekannt ist. Großwälzlager nach der Erfindung werden nachfolgend definiert. Es handelt sich um Wälzlager (Kugellager, Rollenlager oder eine Kombination aus beiden), deren Innendurchmesser freibleibt und nicht von einer im wesentlichen massiven Welle verschlossen wird. Wenigstens ein Lagerring wird über parallel zur Drehachse des Lagers angeordnete Schraubverbindungen mit der Anschlußkonstruktion verbunden.

Bei Wälzlagern, und damit auch bei Großwälzlagern, besteht nach längerer Betriebszeit die Gefahr der Erschöpfung der Gebrauchsdauer durch Zerstörung der Laufbahnen oder der Wälzkörper. Dabei ist der Zeitpunkt der Erschöpfung nicht von vornherein bestimmbar, da er wesentlich auch von Material-, Fertigungs- und Einsatzbedingungen abhängt. Die Zerstörung beginnt üblicherweise mit der Bildung von Pittings, also Vertiefungen, vorwiegend in der Laufbahn, da überwiegend die Laufbahn weicher ist als die mit ihnen zusammenwirkenden Wälzkörper. Die Pittings werden ständig größer und führen zu Ausbröckelungen in der Laufbahn in der Größe von Erbsen oder Bohnen. Bei weiterem Gebrauch des Wälzlagers führen diese Ausbröckelungen zu größeren Werkstoffausbrüchen, die dann ein plötzliches Blockieren des Lagers hervorrufen können, was zum Ausfall des gesamten Großgerätes, beispielsweise Bagger, Kran oder Tagebauabraumgerät, führen kann.

Da Großwälzlager für die vorgenannten Einsatzfälle aufgrund ihrer Größe und ihrer jeweils dem Gerät angepaßten Form in Einzelfertigung hergestellt werden, beträgt ihre Lieferzeit häufig mehrere Monate. Darüber hinaus sind die Einsatzorte häufig sehr weit vom Herstellungsort der Großwälzlager entfernt, so daß auch der Transport durchaus mehrere Wochen dauern kann. Von daher wäre mit einem mehrmonatigen Ausfall des Großgerätes zu rechnen oder es müßte ein Ersatzlager in der Nähe des Einsatzortes des Großwälzlagers bereitgestellt werden, was eine unnötige Kapitalbindung darstellt, insbesondere, wenn dieses Ersatzlager später nicht zum Einsatz gelangt, weil die Gebrauchsdauer des Erstlagers die Gebrauchsdauer des Großgerätes übertrifft.

Nach der DE OS 24 18 056 ist es bekannt, eine Anzeigevorrichtung an das Lager anzubauen, das eine vorgegebene Auslenkung in einer Richtung zwischen den Lagerringen anzeigt. Nachteilig ist diese Anzeigevorrichtung außerhalb des Lagerbauraums angeordnet, wodurch die Gefahr der Beschädigung und sogar Zerstörung der Anzeigevorrichtung besteht. Darüber hinaus gleitet eine Sonde mit ihrem Ende ständig auf dem sich relativ zu ihr drehenden Lagerring, was beim Einsatz über Jahre hinaus zu einem Verschleiß der Anzeigevorrichtung und damit zu einer Fehlanzeige führt, bevor ein Verschleiß des Lagers eintritt.

Aus der US PS 4,092,053 ist es weiterhin bekannt, eine Sonde durch eine Öffnung eines Lagerringes zu führen. Dabei gleitet das Ende der Sonde jedoch auch ständig auf der sich hierzu relativ bewegenden Oberfläche des Lagergegenringes. Das ist beim hier vorgesehenen Einsatz Zweck der Sonde, jedoch nicht erheblich, da hier die Sonde für einen Wägevorgang eingesetzt wird und regelmäßig gegen eine neue Sonde ausgetauscht werden kann, die sich auch bezüglich ihrer Aufgabe des Wägens jederzeit wieder leicht eichen läßt. Die hier gezeigte Sonde weist jedoch beim Einsatz für die Verschleißmessung an Großwälzlagern die gleichen Nachteile auf, wie sie zu der vorbeschriebenen DE OS 24 18 056 aufgezeigt worden sind.

Der Erfindung liegt die Aufgabe zugrunde, eine Verschleißmessvorrichtung für Großwälzlager derartig zu gestalten, daß sie auch noch nach Jahren ihres Einsatzes eine eindeutige und sichere Anzeige des Lagerverschleißes gibt, daß sie einfach gestaltet ist und nicht durch äußere Einflüsse am Lager beschädigt oder zerstört werden kann.

Die Aufgabe wird erfindungsgemäß durch die Ausbildung einer Verschleißmessvorrichtung mit den Merkmalen des Anspruchs 1 gelöst. Vorteilhafte Aus- und Weiterbildungen sind in den Ansprüchen 2 bis 7 beschrieben.

Die Anordnung des Endes der Sonde und der Nut entsprechend den Merkmalen nach Anspruch 5 ermöglicht eine besonders zerstörungssichere Anordnung. Wenn dann noch die Sonde entsprechend Anspruch 6 über eine Dichtung gegen Einflüsse von außen geschützt ist und alternativ oder zusätzlich dazu entsprechend Anspruch 7 gegen Fetteintrag und Abrieb aus dem Wälzkörperbauraum durch eine Dichtung geschützt wird, wird vorteilhaft die Möglichkeit geschaffen, die Verschleißmessvorrichtung dauerhaft funktionsbereit zu halten.

Ein Ausführungsbeispiel der Erfindung ist in der Zeichnung dargestellt und wird im folgenden näher beschrieben. Es zeigen
- Fig. 1: einen Schnitt durch eine Hälfte eines Großwälzlagers und
- Fig. 2: eine vergrößerte Darstellung der Fig. 1 im Bereich der Verschleißmessvorrichtung.

Großwälzlager weisen einen inneren Lagerring 1 und einen äußeren Lagerring 2 auf, zwischen denen Wälzkörper 3 angeordnet sind. Diese Wälzkörper 3 können kugel-, rollen- oder tonnenförmig ausgebildet sein. Im Ausführungsbeispiel sind als Wälzkörper 3 Kugeln vorgesehen. Der innere Lagerring 1 und/oder der äußere Lagerring 2 können aus mehreren Einzelringen oder Ringsegmenten zusammengesetzt sein.

Großwälzlager nach der Erfindung werden dadurch definiert, daß die Mittenbohrung 4 des inneren Lagerrings 1 normalerweise im wesentlichen freibleibt. Der innere Lagerring 1 umgibt somit üblicherweise nicht eine massive Achse. Von daher wird bei Großwälzlagern wenigstens ein Lagerring über parallel zur Drehachse 5 angeordnete Schraubverbindungen mit der Anschlußkonstruktion verbunden. Im Ausführungsbeispiel ist diesbezüglich im inneren Lagerring 1 eine von mehreren auf einem Schraubenkreis angeordnete Befestigungsbohrung 6 gezeigt.

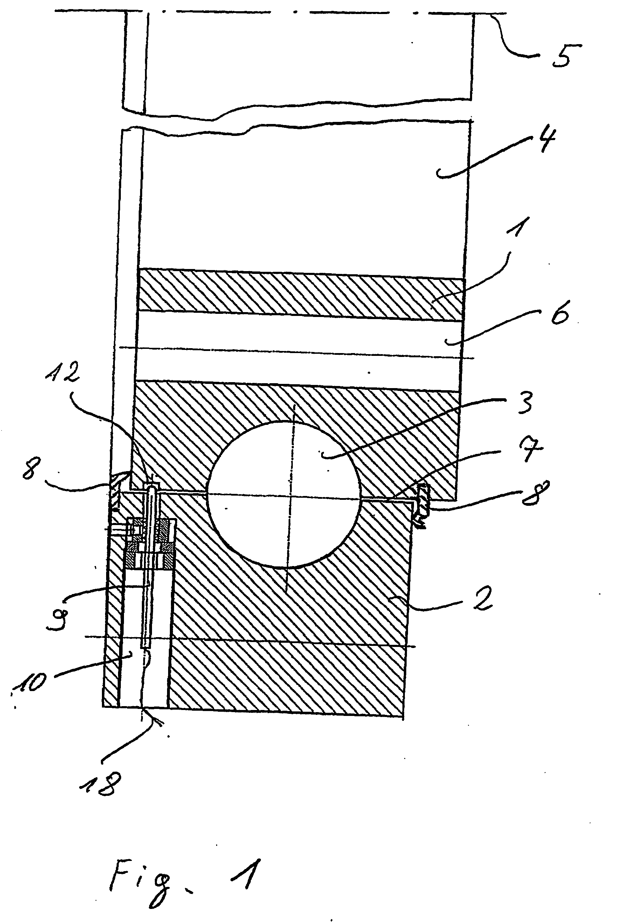

Der die Wälzkörper 3 aufnehmende Wälzkörperbauraum ist üblicherweise mit Schmiermittel, wie Fett, gefüllt und kann durch nicht dargestellte Dichtungen begrenzt werden, die den zwischen Lagerring 1 und Lagerring 2 angeordneten Lagerspalt 7 gegen das Austreten von Schmiermittel abdichten. Darüber hinaus können auch keine Verunreinigungen in den Wälzkörperbauraum eindringen. Anstatt oder zusätzlich zu den vorbeschriebenen Dichtungen zwischen Wälzkörperbauraum und Lagerspalt 7 können, wie in Fig. 1 dargestellt, an den Lagerringen 1, 2 Dichtungen 8 angeordnet sein, die den Lagerspalt 7 nach außen abdichten.

Die Verschleißmessvorrichtung weist eine Sonde 9 auf, die durch eine sich radial zur Drehachse 5 erstreckende Öffnung 10 geführt wird und sich mit ihrem Ende 11 über die Innenkontur des äußeren Lagerringes 2 erstreckt und frei in eine an entsprechender Position des inneren Lagerringes 1 eingebrachte Nut 12, ohne diese zu berühren, eingreift.

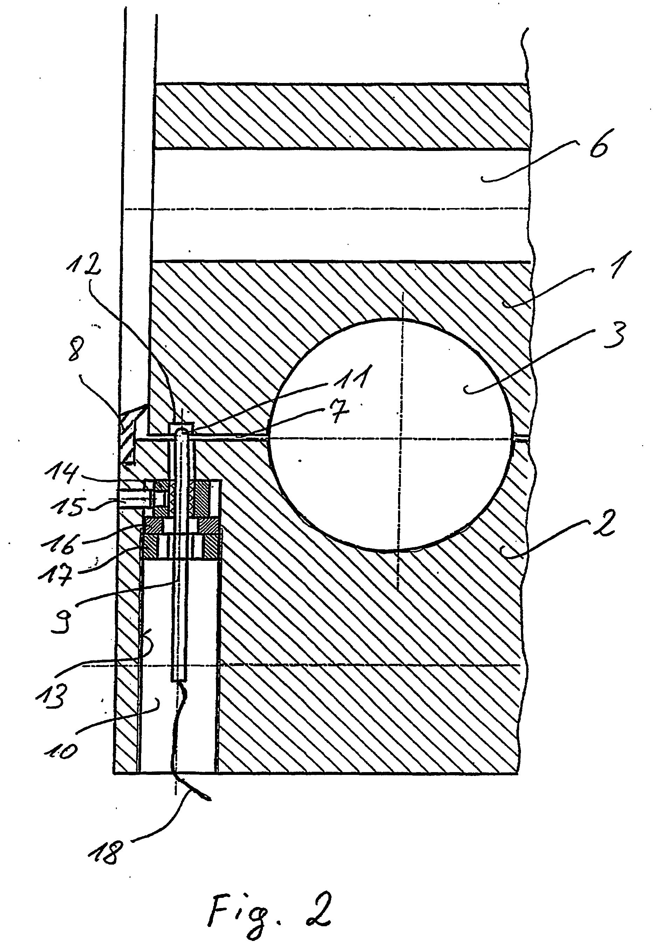

Wie aus Fig. 2 ersichtlich, ist zwischen dem Ende 11 der Sonde 9 und den Nutflächen jeweils axial, aber auch radial, ein Abstand. Dieser Abstand hat ein Maß, das der jeweils vorgegebenen maximalen Verschiebung der Lagerringe 1, 2 gegeneinander bei maximalem Verschleiß entspricht. Der jeweilige Abstand ist bei der Montage einstellbar. Die Summe der beiden axialen Abstände zwischen dem Ende der Sonde 9 und der Breite der Nut 12 ergibt sich aus der Differenz zwischen Nutbreite und Dicke des Endes 11 der Sonde 9. Dieser Wert kann in einfacher Weise durch unterschiedlich dicke Enden 11 der Sonde 9 eingestellt werden. Dadurch wird der Vorteil erzielt, daß für verschiedene Verschleißsummenwerte gleiche Nutmaße und auch gleiche Einbaumaße für die Sonde mit ihrer Befestigung verwendet werden können. Im Ausführungsbeispiel ist die, die Sonde 9 aufnehmende Öffnung 10 als Bohrung mit einem Innengewinde 13 ausgebildet. Das Durchmessermaß und das Gewindemaß des Innengewindes 13 der Öffnung 10 kann bei der vorstehend beschriebenen Ausbildung auch stets gleichbleiben.

Die Sonde 9 ist in einem Halteteil 14 axial und radial fixiert. Dieses Halteteil 14 weist einen kleineren Durchmesser auf als die Öffnung 10 und kann somit in dieser bezüglich ihrer Lage eingestellt werden. Diese Einstellung erfolgt über eine Einstellschraube 15, die die Lage der Sonde 9 in Richtung der Drehachse 5, also quer zur Nut 12, verstellen kann. Durch diese Maßnahme können die jeweiligen, auch unterschiedlichen axialen Abstände zwischen Nut 12 und Ende 11 der Sonde 9 eingestellt werden, nachdem ihre Summe bereits nach der Auswahl einer Sonde 9 mit einem entsprechend dicken Ende 11 eingestellt wurde. Der bezüglich der Drehachse 5 des Lagers vorgesehene radiale Abstand zwischen dem Ende 11 der Sonde 9 und dem Boden der Nut 12 wird durch ein Verschieben der Sonde 9 im Halteteil 14 eingestellt und anschließend fixiert. Das Fixieren kann beispielsweise durch Verkleben oder Versiegeln von Sonde 9 und Halteteil 14 erfolgen. Über einen Andruckring 16 wird das Halteteil 14 mittels einer Mutter 17 in der als Sackbohrung ausgebildeten Öffnung 10 fixiert.

Die Sonde 9 ist gegenüber dem Lagerring 2 elektrisch isoliert. Im Ausführungsbeispiel ist in der Aufnahmebohrung des Halteteils 14 eine Isolierschicht eingebracht. Die beiden Lagerringe 1, 2 sind elektrisch miteinander verbunden. Üblicherweise erfolgt diese elektrische Verbindung über die metallische Berührung vom Lagerring 1 über die Wälzkörper 3 auf den Lagerring 2. Sobald die vorgegebene maximale Verschiebung der Lagerringe gegeneinander, hervorgerufen durch den Verschleiß der Laufbahn des Lagers, erreicht ist, kommt es zu einer Berührung des Endes 11 der Sonde 9 mit einer Fläche der Nut 12. Damit wird eine elektrische Verbindung zwischen der Sonde 9 und dem sie tragenden äußeren Lagerring 2 geschlossen. Über entsprechende elektrische Leitungen an der Sonde 9 und am äußeren Lagerring 2 kann dieses elektrische Signal (Schließen eines Stromkreises) an entsprechende Warn- oder Auswerteeinrichtungen weitergeleitet werden. Dadurch erhält der Betreiber die Information, daß der Verschleiß des Lagers so weit fortgeschritten ist, daß dieses Lager in absehbarer Zeit zerstört ist und kann entsprechende Maßnahmen einleiten.

Die Auslösung der elektrischen Information, daß der vorgegebene Verschleiß des Lagers eingetreten ist, kann auch in beliebiger anderer Weise erfolgen. Alternativ und nicht dargestellt kann die Sonde9 in einer Aufnahme gehalten sein, die als Signal eine Ausbiegung der Sonde bei Anstoßen ihres Endes 11 an eine der Flächen der Nut 12 registriert und diese Information an eine entsprechende Wam- oder Meßschaltung weitergibt.

### Bezugszeichenliste

- 1.: Lagerring
- 2.: Lagerring
- 3.: Wälzkörper
- 4.: Mittenbohrung
- 5.: Drehachse
- 6.: Befestigungsbohrung
- 7.: Lagerspalt
- 8.: Dichtung
- 9.: Sonde
- 10.: Öffnung
- 11.: Ende
- 12.: Nut
- 13.: Innengewinde
- 14.: Halteteil
- 15.: Einstellschraube
- 16.: Andruckring
- 17.: Mutter
- 18.: Leitung

## Patentansprüche

1. Verschleißmessvorrichtung eines Großwälzlagers, welches aus zwei Lagerringen (1, 2) besteht, zwischen denen ein Lagerspalt (7) und ein Wälzkörperbauraum gebildet ist, in dem Wälzkörper (3) angeordnet sind, mit einer Anzeige, die eine vorgegebene Auslenkung zwischen den Lagerringen (1, 2) anzeigt, und einer Sonde (9), die in einer Öffnung (10) des einen Lagerringes (2) angeordnet ist und mit ihrem Ende (11) mit einer Fläche des anderen Lagerringes (1) in Kontakt treten kann, **dadurch gekennzeichnet, daß** der der Sonde (9) gegenüberliegende Lagerring (1) mit einer Nut (12) ausgebildet ist, in die das Ende (11) der Sonde (9) hineinragt und wobei die Flächen der Nut (12) jeweils einen Abstand zur Sonde (9) aufweisen, der einem in der zugehörigen Richtung vorgegebenen Verschleißmaß entspricht.

2. Verschleißmessvorrichtung nach Anspruch 1, **dadurch gekennzeichnet, daß** die Sonde (9) gegenüber dem sie tragenden Lagerring (2) elektrisch isoliert eingebaut ist und zwischen den beiden Lagerringen (1, 2) eine elektrische Verbindung besteht.

3. Verschleißmessvorrichtung nach Anspruch 1, **dadurch gekennzeichnet, daß** die Befestigung der Sonde (9) an dem sie tragenden Lagerring (2) über eine, eine Auslenkung der Sonde (9) registrierende Messvorrichtung erfolgt.

4. Verschleißmessvorrichtung nach einem oder mehreren der Ansprüche 1 bis 3, **dadurch gekennzeichnet, daß** sich die Öffnung (10) zur Aufnahme der Sonde (9) radial in bezug auf die Drehachse (5) des Lagers erstreckt.

5. Verschleißmessvorrichtung nach einem oder mehreren der Ansprüche 1 bis 4, **dadurch gekennzeichnet, daß** die Nut (12) und das Ende (11) der Sonde (9) im Bereich des Lagerspaltes (7) zwischen den Lagerringen (1, 2) außerhalb des Wälzkörperbauraums angeordnet sind.

6. Verschleißmessvorrichtung nach einem oder mehreren der Ansprüche 1 bis 5, **dadurch gekennzeichnet, daß** der Lagerspalt (7) zwischen den Lagerringen (1, 2) außerhalb des Wälzkörperbauraums und jenseits des Endes der Sonde mittels einer Dichtung (8) nach außen verschlossen ist.

7. Verschleißmessvorrichtung nach einem oder mehreren der Ansprüche 1 bis 6, **dadurch gekennzeichnet, daß** im Lagerspalt (7) zwischen den Lagerringen (1, 2) zwischen dem Wälzkörperbauraum und dem Ende (11) der Sonde (9) eine Dichtung angeordnet ist.

## Claims

1. Wear measurement device of a large rolling bearing, which consists of two bearing rings (1, 2), between which are formed a bearing gap (7) and a roll body construction space, in which roll bodies (3) are disposed, with an indicator, which indicates a preset deflection between the bearing rings (1, 2), and a probe (9), which is disposed in an opening (10) of the one bearing ring (2) and with its end (11) can come into contact with a face of the other bearing ring (1), **characterised in that** the bearing ring (1) located opposite the probe (9) is provided with a groove (12), into which the end (11) of the probe (9) projects, and wherein the faces of the groove (12) are respectively spaced from the probe (9), said space corresponding to a preset wear dimension in the associated direction.

2. Wear measurement device according to Claim 1, **characterised in that** the probe (9) is installed to be electrically insulated relative to the bearing ring (2) supporting it and an electrical connection is present between the two bearing rings (1, 2).

3. Wear measurement device according to Claim 1, **characterised in that** the probe (9) is fastened on the bearing ring (2) supporting it via a measuring device recording a deflection of the probe (9).

4. Wear measurement device according to one or more of Claims 1 to 3, **characterised in that** the opening (10) for receiving the probe (9) extends radially relative to the rotational axis (5) of the bearing.

5. Wear measurement device according to one or more of Claims 1 to 4, **characterised in that** the groove (12) and the end (11) of the probe (9) are disposed outside the roll body construction space in the region of the bearing gap (7) between the bearing rings (1, 2).

6. Wear measurement device according to one or more of Claims 1 to 5, **characterised in that** the bearing gap (7) between the bearing rings (1, 2) outside the roll body construction space and on the other side of the end of the probe is closed off to the outside by means of a seal (8).

7. Wear measurement device according to one or more of Claims 1 to 6, **characterised in that** a seal is disposed in the bearing gap (7) between the bearing rings (1, 2) between the roll body construction space and the end (11) of the probe (9).

## Revendications

1. Dispositif de mesure d'usure d'un palier de grandes dimensions, qui est constitué de deux bagues de palier (1, 2) et entre lesquelles est formée une fente de palier (7) et un logement de corps de palier, dans lequel sont disposés des corps de palier (3), avec un affichage qui indique une déviation prédéterminée entre les bagues de palier (1, 2), et une sonde (9) qui est disposée dans une ouverture (10) d'une bague de palier (2) et qui, avec son extrémité (11), peut venir en contact avec une face de l'autre bague de palier (1), **caractérisé en ce que** la bague de palier (1) opposée à la sonde (9) est réalisée avec une rainure (12) dans laquelle fait saillie l'extrémité (11) de la sonde (9), et où les faces de la rainure (12) présentent chacune un écart à la sonde (9) qui correspond à une mesure d'usure prédéterminée dans la direction associée.

2. Dispositif de mesure d'usure selon la revendication 1, **caractérisé en ce que** la sonde (9) est installée d'une manière isolée électriquement par rapport à la bague de palier (2) qui la porte et qu'il existe entre les deux bagues de palier (1, 2) une liaison électrique.

3. Dispositif de mesure d'usure selon la revendication 1, **caractérisé en ce que** la fixation de la sonde (9) a lieu à la bague de palier (2) qui la porte par un dispositif de mesure enregistrant une déviation de la sonde (9).

4. Dispositif de mesure d'usure selon l'une ou plusieurs des revendications 1 à 3, **caractérisé en ce que** l'ouverture (10) pour la réception de la sonde (9) s'étend radialement relativement à l'axe de rotation (5) du palier.

5. Dispositif de mesure d'usure selon l'une ou plusieurs des revendications 1 à 4, **caractérisé en ce que** la rainure (12) et l'extrémité (11) de la sonde (9) sont disposées dans la zone de la fente de palier (7) entre les bagues de palier (1, 2) à l'extérieur du logement de corps de roulement.

6. Dispositif de mesure d'usure selon l'une ou plusieurs des revendications 1 à 5, **caractérisé en ce que** la fente de palier (7) entre les bagues de palier (1, 2) à l'extérieur du logement des corps de roulement et au-delà de l'extrémité de la sonde est fermée vers l'extérieur au moyen d'une garniture d'étanchéité (8).

7. Dispositif de mesure d'usure selon l'une ou plusieurs des revendications 1 à 6, **caractérisé en ce qu'**il est disposé dans la fente de palier (7) entre les bagues de palier (1, 2), entre le logement des corps de roulement et l'extrémité (11) de la sonde (9) une garniture d'étanchéité.
